Europäisches Patentamt

European Patent Office

Office européen des brevets

(19)

(11) Numéro de publication: **0 126 663**
**A1**

# (12) DEMANDE DE BREVET EUROPEEN

(21) Numéro de dépôt: **84400773.2**

(22) Date de dépôt: **18.04.84**

(51) Int. Cl.³: **A 47 J 37/08**

(30) Priorité: **18.05.83 FR 8308196**

(43) Date de publication de la demande: **28.11.84**
**Bulletin 84/48**

(84) Etats contractants désignés: **BE DE GB IT**

(71) Demandeur: **SEB S.A., F-21260 Selongey (FR)**

(72) Inventeur: **Didierlaurent, Alain, 16 rue du Pré Paré,**
**F-88200 Remiremont (FR)**
Inventeur: **Antoine, Dominique, Chevrimont Cleurie,**
**F-88120 Vagney (FR)**

(74) Mandataire: **Bouju, André, 38 Avenue de la Grande**
**Armée, F-75017 Paris (FR)**

(54) **Accessoire pour grille-pain permettant de cuire notamment des croque-monsieur.**

(57) L'accessoire (1) du grille-pain (2) permet de cuire notamment un croque-monsieur (3).

Cet accessoire comprend deux minces parois métalliques (4a, 4b) écartées l'une de l'autre en définissant entre elles un logement sensiblement parallélépipédique destiné à recevoir les tranches de pain (3a), cet accessoire (1) étant destiné à être introduit dans la chambre de cuisson (5) du grille-pain (2), de telle sorte que les tranches de pain du croque-monsieur (3) soient séparées des résistances chauffantes (6) du grille-pain (2) par les parois métalliques (4a, 4b).

Utilisation notamment pour transformer les grille-pain en appareils pour la cuisson des croque-monsieur.

EP 0 126 663 A1

0126663

1

## "Accessoire pour grille-pain permettant de cuire notamment des croque-monsieur"

La présente invention concerne un accessoire pour grille-pain permettant de cuire des tranches de pain enserrant un aliment, et en particulier des croque-monsieur.

L'invention vise également un grille-pain comprenant un tel accessoire.

Les grille-pain connus comprennent une chambre de cuisson généralement adaptée pour recevoir verticalement une tranche de pain.

Les résistances électriques chauffantes placées sur les parois latérales opposées de cette chambre de cuisson émettent un rayonnement thermique lumineux qui permet le grillage du pain.

Ces grille-pain ne sont pas adaptés pour cuire les croque-monsieur qui sont composés de deux tranches de pain enserrant une préparation culinaire à base de viande et/ou de fromage telle qu'une fine tranche de jambon et/ou de fromage.

En effet, la cuisson des croque-monsieur exige, non pas un rayonnement thermique lumineux de courte longueur d'onde mais au contraire un rayonnement thermique obscur de grande longueur d'onde , sinon le pain grille en surface, sans que la cuisson de l'aliment compris entre les tranches de pain puisse être réalisée.

C'est la raison pour laquelle, la cuisson des croque-monsieur est réalisée dans des grils spéciaux composés de deux plaques de cuisson appliquées sur les tranches de pain du croque-monsieur et émettant un rayonnement thermique obscur.

Le but de la présente invention est de réaliser un accessoire adaptable d'une manière simple à un grille-pain classique et permettant de cuire des tranches de pain enserrant un aliment et en particulier des croque-monsieur, sans qu'il soit nécessaire de modifier la puissance et la temporisation du chauffage de ce grille-pain.

Suivant l'invention, cet accessoire est caractérisé en

2

ce qu'il comprend deux minces parois métalliques écartées l'une de l'autre en définissant entre elles un logement sensiblement parallélépipédique destiné à recevoir les tranches de pain, cet accessoire étant destiné à être introduit dans la chambre de cuisson du grille-pain, de telle sorte que les tranches de pain enserrant l'aliment soient séparées des résistances chauffantes du grille-pain par lesdites parois métalliques.

Ces parois métalliques évitent que les tranches de pain soient exposées au rayonnement thermique lumineux des résistances chauffantes du grille-pain. Ainsi les tranches de pain sont soumises à un rayonnement thermique obscur qui les réchauffe et permet la cuisson des aliments tels que le fromage et la viande compris entre les tranches de pain.

En raison de la minceur des parois métalliques de l'accessoire, son inertie thermique est faible de sorte que la cuisson de l'aliment tel qu'un croque-monsieur, est réalisée dans le temps prédéterminé par la temporisation du grille-pain.

Ainsi, l'invention permet de transformer d'une manière extrèmement simple, un grille-pain en un appareil pour cuire les tranches de pain enserrant un aliment, et notamment les croque-monsieur.

Selon une version avantageuse de l'invention, l'épaisseur des parois métalliques est comprise entre une valeur minimale compatible avec les résistances mécaniques et une valeur maximale déterminée pour que la cuisson du croque-monsieur soit réalisée dans le temps de chauffage prédéterminé par la temporisation qui équipe normalement le grille-pain.

Dans le cas où ces parois sont réalisées en tôle d'acier doux, leur épaisseur optimale est comprise entre 0,4 et 0,6 mm.

Selon une version préférée de l'invention, la surface extérieure des parois métalliques qui est destinée à être exposée au rayonnement des résistances chauffantes du grille-pain a un état de surface absorbant le rayonnement lumineux

3

émis par ces résistances.

Cet état de surface permet d'augmenter la transmission du rayonnement thermique émis par les résistances chauffantes vers l'aliment à cuire.

Dans un mode de réalisation particulièrement simple de l'invention, l'accessoire est constitué par une simple tôle pliée en U, la base de ce U comprenant une charnière qui relie les deux parois métalliques de l'accessoire. Cette charnière facilite la mise en place du croque-monsieur entre les deux parois métalliques de l'accessoire et permet de régler la distance entre les deux parois en fonction de l'épaisseur du croque-monsieur.

L'invention vise également un grille-pain comprenant un accessoire pour griller les croque-monsieur, cet accessoire étant placé de façon amovible dans la chambre de cuisson du grille-pain.

D'autres particularités et avantages de l'invention apparaîtront encore dans la description ci-après.

Aux dessins annexés donnés à titre d'exemples non limitatifs :

- la figure 1 est une vue en perspective d'un accessoire pour cuire les croque-monsieur et d'un grille-pain classique destiné à recevoir cet accessoire,

- la figure 2 est une coupe longitudinale d'un grille-pain renfermant l'accessoire conforme à l'invention,

- la figure 3 est une vue en coupe transversale d'une version simplifiée d'un accessoire conforme à l'invention.

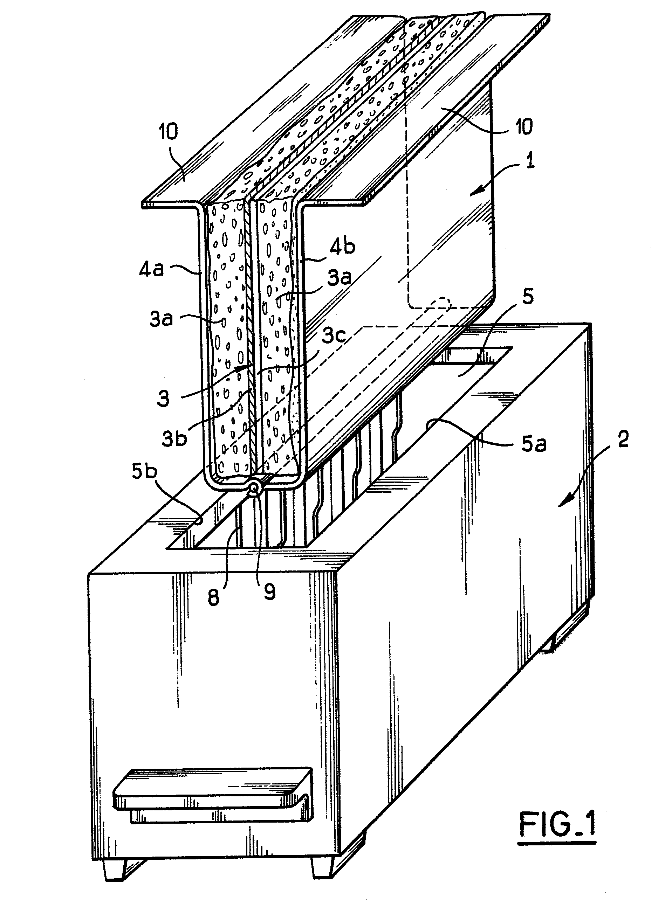

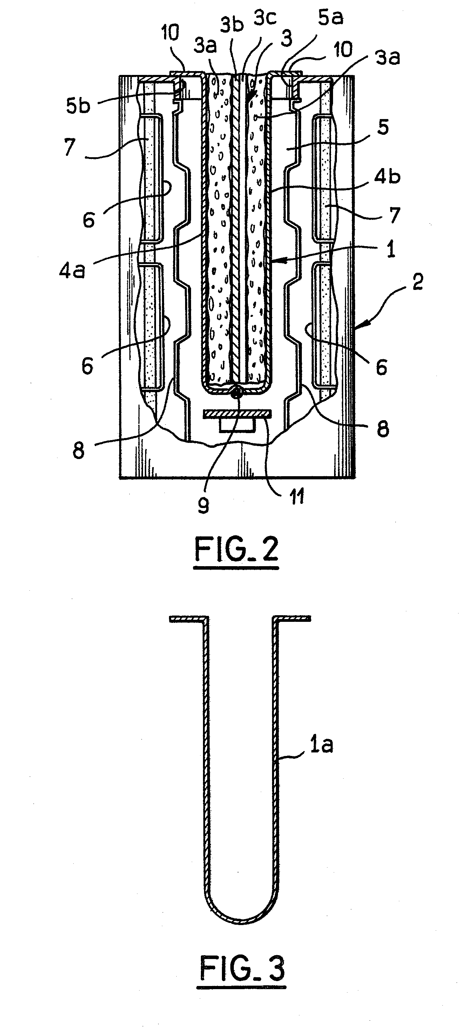

Dans la réalisation des figures 1 et 2, l'accessoire 1 du grille-pain 2 pour permettre la cuisson du croque-monsieur 3 constitué par deux tranches de pain 3a enserrant une tranche de jambon 3b et une tranche de fromage 3c, comprend deux minces parois métalliques 4a, 4b écartées l'une de l'autre et définissant entre elles un logement sensiblement parallélépipédique recevant le croque-monsieur 3.

Comme indiqué sur la figure 2, cet accessoire 1 prend

4

place dans la chambre de cuisson 5 du grille-pain 2 dont les parois latérales 7 portent des résistances électriques chauffantes nues 6.

La hauteur et la longueur des parois 4a, 4b de l'accessoire 1 correspondent respectivement sensiblement à la hauteur et à la longueur de la chambre de cuisson 5.

Entre l'accessoire 1 et les résistances de chauffage 6 sont disposées deux grilles métalliques 8 qui évitent tout risque de contact entre l'accessoire 1 et les résistances 6.

Dans la position représentée sur la figure 2, on voit par conséquent que le croque-monsieur 3 est séparé des résistances chauffantes 6 par les parois métalliques 4a, 4b de l'accessoire 1.

Dans l'exemple représenté, l'accessoire 1 présente une section transversale en U. Les deux parois métalliques 4a, 4b sont articulées à la base du U par une charnière 9.

Ces deux parois métalliques 4a, 4b sont réalisées par exemple en tôle d'acier doux ordinaire.

L'épaisseur des parois métalliques 4a, 4b est comprise entre une valeur minimale compatible avec leur résistance mécanique et une valeur maximale déterminée pour que la cuisson du croque-monsieur 3 soit réalisée dans le temps de chauffage prédéterminé par la temporisation qui équipe normalement le grille-pain 2.

Dans le cas où les deux parois 4a, 4b sont en tôle d'acier doux, cette épaisseur est de préférence comprise entre 0,4 et 0,6 mm.

De préférence, la surface extérieure des deux parois 4a, 4b exposée au rayonnement des résistances de chauffage 6 a un état de surface absorbant le rayonnement lumineux émis par ces résistances.

Cet état de surface absorbant peut être réalisé au moyen d'une peinture noire résistant à la chaleur, d'un dépôt électro-chimique tel que de l'alumine, d'une abrasion mécanique ou chimique ayant pour effet de dépolir cette sur-

5

face, d'un traitement thermique approprié et analogue.

L'état de la surface intérieure des deux parois 4a, 4b importe peu.

On voit par ailleurs sur les figures 1 et 2 que les deux parois 4a, 4b portent à l'opposé de la charnière 9 deux ailes 10 dirigées vers l'extérieur et sensiblement perpendiculaires à chacune des parois 4a, 4b.

Lorsque l'accessoire 1 est en position à l'intérieur de la chambre de cuisson 5 du grille-pain 2, les ailes 10 reposent sur les bords opposés 5a, 5b de l'entrée de la chambre de cuisson 5.

La longueur de ces ailes 10 est sensiblement égale à la longueur des bords opposés 5a, 5b de l'entrée de la chambre 5, de sorte que ces ailes 10 ferment complètement cette chambre 5, ce qui entraîne un effet de four améliorant le rendement.

Ces ailes 10 peuvent éventuellement être conformées ou être munies de moyens appropriés pour centrer parfaitement l'accessoire 1 dans la chambre de cuisson 5.

Le fonctionnement du dispositif que l'on vient de décrire est le suivant :

On commence par placer le croque-monsieur 3 entre les deux parois articulées 4a, 4b de l'accessoire 1.

Il suffit ensuite d'introduire verticalement l'accessoire 1 dans la chambre de cuisson 5 du grille-pain 2, puis de brancher ce dernier au secteur.

Les résistances chauffantes 6 deviennent rapidement incandescentes.

Les parois métalliques 4a, 4b de l'accessoire 1 protègent le croque-monsieur 3 du rayonnement thermique lumineux direct émis par les résistances chauffantes 6, de sorte que ce croque-monsieur 3 est chauffé uniquement par rayonnement thermique obscur qui a pour effet de cuire le pain 3a, et les tranches d'aliment 3b, 3c du croque-monsieur et non pas de griller en surface les tranches de pain 3a.

Le transfert thermique entre les résistances 6 et le

0126663

6

croque-monsieur 3 est favorisé par la minceur des parois 4a, 4b et par le fait que leur surface extérieure présente des propriétés absorbantes vis-à-vis du rayonnement thermique lumineux émis par les résistances 6.

Par ailleurs, le fait que les ailes 10 de l'accessoire 1 ferment complètement l'entrée de la chambre de cuisson 5 évite toute déperdition de chaleur vers l'extérieur.

Ainsi, on obtient avec des moyens remarquablement simples, une cuisson rapide et efficace du croque-monsieur 3, sans modifier ni le réglage de la puissance de chauffage du grille-pain 2, ni le réglage de la temporisation qui équipe normalement ce dernier.

Lorsque le temps de cuisson est écoulé, la temporisation déclenche automatiquement la sortie de l'accessoire 1 renfermant le croque-monsieur 3 au moyen d'un dispositif d'éjection 11 (voir figure 2), comme dans le cas du grillage de tranches de pain.

Bien entendu l'invention n'est pas limitée aux exemples que l'on vient de décrire et on peut apporter à ceux-ci de nombreuses modifications sans sortir du cadre de l'invention.

Ainsi la construction de l'accessoire 1 peut encore être simplifiée, en le réalisant à partir d'une feuille métallique unique 1a pliée en U comme indiqué sur la figure 3.

Par ailleurs, dans le cas de la réalisation des figures 1 et 2 les deux parois métalliques 4a, 4b de l'accessoire 1 pourraient être rappelées l'une vers l'autre au moyen d'un ressort pour appliquer une légère pression sur le croque-monsieur 3.

On peut ainsi améliorer le contact thermique entre ces parois 4a, 4b et le croque-monsieur 3.

D'autre part des moyens pourraient être prévus pour verrouiller ensemble les deux parois 4a, 4b après mise en place entre elles du croque-monsieur.

7

REVENDICATIONS

1. Accessoire (1) pour grille-pain (2) permettant de cuire des tranches de pain (3a) enserrant un aliment (3b, 3c) et en particulier un croque-monsieur (3), caractérisé en ce qu'il comprend deux minces parois métalliques (4a, 4b) écartées l'une de l'autre en définissant entre elles un logement sensiblement parallélépipédique destiné à recevoir les tranches de pain (3a), cet accessoire (1) étant destiné à être introduit dans la chambre de cuisson (5) du grille-pain (2) de telle sorte que les tranches de pain (3a) enserrant l'aliment (3b, 3c) soient séparés des résistances chauffantes (6) du grille-pain (2) par lesdites parois métalliques (4a, 4b).

2. Accessoire conforme à la revendication 1, caractérisé en ce que l'épaisseur des parois métalliques (4a, 4b) est comprise entre une valeur minimale compatible avec leur résistance mécanique et une valeur maximale déterminée pour que la cuisson du croque-monsieur (3) soit réalisée dans le temps de chauffage prédéterminé par la temporisation qui équipe normalement le grille-pain (2).

3. Accessoire conforme à l'une des revendications 1 ou 2, caractérisé en ce que les dimensions des parois (4a, 4b) correspondent sensiblement à la hauteur et à la longueur de la chambre de cuisson (5) du grille-pain (2).

4. Accessoire conforme à l'une des revendications 1 à 3, caractérisé en ce que les parois métalliques (4a, 4b) sont en acier doux.

5. Accessoire conforme à l'une des revendications 1 à 4, caractérisé en ce que la surface extérieure des parois métalliques (4a, 4b) destinées à être exposées au rayonnement des résistances chauffantes (6) du grille-pain (2) a un état de surface absorbant vis-à-vis du rayonnement lumineux émis par ces résistances.

6. Accessoire conforme à l'une quelconque des revendications 1 à 5, caractérisé en ce qu'il présente une section

8

transversale sensiblement en U.

7. Accessoire conforme à la revendication 6, caractérisé en ce que les deux parois métalliques (4a, 4b) sont réunies à la base du U par une charnière (9).

8. Accessoire conforme à l'une des revendications 6 ou 7, caractérisé en ce que les deux parois métalliques (4a, 4b) portent à l'opposé de la base du U, deux ailes (10) dirigées vers l'extérieur et sensiblement perpendiculaires à chacune des parois.

9. Grille-pain comportant un accessoire (1) pour griller des croque-monsieur, conforme à l'une des revendications 1 à 8, cet accessoire étant placé de façon amovible dans la chambre de cuisson (5) du grille-pain (2).

FIG.1

FIG. 2

FIG. 3

126663

Office européen
des brevets

**RAPPORT DE RECHERCHE EUROPEENNE**

Numéro de la demande

EP 84 40 0773

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (Int. Cl. ³) |
| A | US-A-2 230 700 (H. SCHWARTZ)<br><br>* Page 1, colonne de gauche, ligne 54 - colonne de droite, ligne 3; figures 1-4 * | 1,3,6, 7,9 | A 47 J 37/08 |
| A | FR-A-2 302 067 (SEB S.A.)<br>* Page 6, lignes 6-10 * | 5 | |
| A | US-A-2 151 105 (HENDERSHOT & HUGHES)<br>* Page 2, colonne de droite, lignes 20-22; figure 2 * | 8 | |
| | | | **DOMAINES TECHNIQUES RECHERCHES (Int. Cl. ³)**<br><br>A 47 J 37/08<br>A 47 J 37/06 |

Le présent rapport de recherche a été établi pour toutes les revendications

| Lieu de la recherche | Date d'achèvement de la recherche | Examinateur |
|---|---|---|
| LA HAYE | 08-08-1984 | HAZEL J.F. |